# EUROPÄISCHE PATENTSCHRIFT

(11) **EP 3 274 924 B1**
(45) Veröffentlichungstag und Bekanntmachung des Hinweises auf die Patenterteilung: **29.01.2020**
(21) Anmeldenummer: 16711592.2
(22) Anmeldetag: 18.03.2016
(51) Int. Cl.: G06K 19/07, G06K 19/10, G06K 19/077

(54) **VERFAHREN UND SYSTEM ZUR FÄLSCHUNGSSICHERUNG**
METHOD AND SYSTEM FOR PREVENTING FORGERY
PROCÉDÉ ET SYSTÈME ANTI-FALSIFICATION

(30) Priorität: 25.03.2015 DE 102015003837
(43) Veröffentlichungstag der Anmeldung: 31.01.2018
(73) Patentinhaber: Giesecke+Devrient Mobile Security GmbH, 81677 München (DE); Fischer, Dietrich, 8010 Graz (AT)
(72) Erfinder: FISCHER, Dietrich, 79110 Freiburg (DE); BALDISCHWEILER, Michael, 81825 München (DE); MOTÚZ, Rastislav, 94901 Nitra (SK)
(74) Vertreter: Klunker IP Patentanwälte PartG mbB
(86) Internationale Anmeldenummer: PCT/EP2016/056041
(87) Internationale Veröffentlichungsnummer: WO 2016/150877

(56) Entgegenhaltungen:
- WO-A2-03/054808
- US-A1- 2014 070 923

## Beschreibung

Die vorliegende Erfindung betrifft ein Verfahren und ein System zur Fälschungssicherung eines Objekts. Insbesondere betrifft die Erfindung ein Verfahren und ein System zur Fälschungssicherung eines Objekts mittels eines Siegelelements, welches eine Antennenstruktur, beispielsweise eine Spule, umfasst, die als elektrischer Schwingkreis angesehen werden kann.

Herkömmliche Verfahren zur Objektsicherung mittels eines Siegels beruhen im Wesentlichen darauf, dass das Siegel derart ausgebildet ist, dass eine Manipulation an dem Objekt dadurch erkannt werden kann, dass das Siegel zerstört oder zumindest beschädigt worden ist. Eine Manipulation an einem Siegel, welches eine Spule umfasst, kann beispielsweise daran erkannt werden, dass die Spule beschädigt worden ist, beispielsweise einen Leiterbahnbruch aufweist. Ein solcher Leiterbahnbruch ist mittels geeigneter Auswertungsverfahren leicht erkennbar.

Eine Fälschungssicherung mittels eines Siegelelements oder Siegels ist dann wirkungslos, wenn es gelingt, das Siegel beschädigungsfrei von dem Objekt abzulösen und erneut wieder aufzubringen, entweder auf das ursprüngliche Objekt oder auf ein gefälschtes Objekt.

Die US 2014/0070923A1 offenbart ein Verfahren und ein System zur Fälschungssicherung eines Objektes, wobei ein Siegelelement mit einer Antennenstruktur bereitgestellt wird. Relativ zu dieser Antennenstruktur ist ein Koppelelement angeordnet, wobei dieses Koppelelement vorgesehen ist, einen Wert eines Schwingkreisparameters, nämlich die Resonanzfrequenz, zu beeinflussen, wenn die Antennenstruktur relativ zu dem Koppelelement angeordnet wird, wobei durch das Anordnen der Wert des Schwingkreisparameters, d.h. die Resonanzfrequenz, abhängig von der festgelegten relativen Anordnung definiert wird.

Die WO 03/054808 A2 offenbart ein Verfahren und ein System zur Fälschungssicherung eines Objekts, bei dem ein Siegelelement mit einer Antennenstruktur und ein Koppelelement an einem Objekt derart angeordnet werden, dass das Koppelelement einen Wert eines Schwingkreisparameters der Antennenstruktur beeinflusst, wobei der Wert des Schwingkreisparameters der an dem Objekt angeordneten Antennenstruktur abhängig von der festgelegten relativen Anordnung definiert wird.

Folglich ist es die Aufgabe der vorliegenden Erfindung, ein Verfahren und ein System zur Fälschungssicherung eines Objekts mittels eines Siegelelements vorzuschlagen, welche auch ein zerstörungsfreies Ablösen und erneutes Aufbringen des Siegels auf ein Objekt erkennbar machen.

Diese Aufgabe wird durch die Merkmale der Ansprüche 1 bzw. 7 gelöst.

Die vorliegende Erfindung basiert auf dem Grundgedanken, eine Schwingkreiseigenschaft, beispielsweise eine Eigenresonanzfrequenz oder eine Güte des Schwingkreises, der durch eine Antennenstruktur des Siegelelements bereitgestellt wird, als Echtheitsmerkmal eines Objekts zu verwenden, welches mit dem Siegel gesichert ist. Das Siegel ist dabei auf dem Objekt relativ zu zumindest einem Koppelelement angeordnet. Das Koppelelement ist vorgesehen und eingerichtet, die Schwingkreiseigenschaft der Antennenstruktur zu verändern. Erst durch die relative Anordnung der Antennenstruktur zu dem zumindest einen Koppelelement an dem Objekt wird der Wert der Schwingkreiseigenschaft definiert. Folglich liefert jede relative Anordnung der Antennenstruktur zu dem zumindest einen Koppelelement einen spezifischen Wert des Schwingkreisparameters, welcher somit als Echtheitsmerkmal verwendet werden kann.

Eine bevorzugte Ausführungsform eines Verfahrens zur Fälschungssicherung eines Objekts umfasst demnach die folgenden Schritte:
Es wird ein Siegelelement mit einer Antennenstruktur bereitgestellt, welche als elektrischer Schwingkreis angesehen werden kann.

Weiterhin wird ein zu sicherndes Objekt bereitgestellt.

Schließlich wird zumindest ein an dem Objekt angeordnetes oder an dem Objekt anordenbares Koppelelement bereitgestellt. Ein solches Koppelelement ist vorgesehen und eingerichtet, einen Wert eines Schwingkreisparameters, beispielsweise eine Güte oder eine Eigenresonanzfrequenz, des Schwingkreises, welcher durch die Antennenstruktur des Siegelelements bereit gestellt wird, zu beeinflussen, wenn die Antennenstruktur relativ zu dem zumindest einen Koppelelement an dem Objekt angeordnet wird.

Geeignete Koppelelemente sind beispielsweise solche Elemente, welche als zusätzliche Kapazität und/oder zusätzliche Induktivität wirken können. Zusätzliche Kapazitäten können beispielsweise durch metallische Flächen gebildet werden, zusätzliche Induktivitäten können beispielsweise durch Spulenelemente bereitgestellt werden.

Ein Koppelelement in Sinne der vorliegenden Anmeldung ist ein von der Antennenstruktur des Siegelelements separates Element. In dem Fall, dass das Siegelelement zusätzlich zu der Antennenstruktur weitere, mit der Antennenstruktur verbundene oder zu verbindende Bauteile aufweist, beispielsweise einen Chip, zusätzliche Antennenanteile oder dergleichen, welche einer anderen als der hier beschriebenen Funktionalität der Antennenstruktur dienen (z.B. der kontaktlosen Datenübertragung etc.), so dürfen diese Bauteile nicht mit dem erfindungsgemäßen Koppelelement verwechselt werden - auch wenn diese Bauteile die Schwingkreiseigenschaften der Antennenstruktur verändern. Weiterhin sollen im Sinne der Erfindung Elemente oder Bestandteile des zu sichernden Objekts an sich nicht mit dem erfindungsgemäßen Koppelelement verwechselt werden, welches stets separat zu dem Objekt und separat zu der Antennenstruktur des Siegelelements und eventuell damit verbundener Bauteile bereitgestellt wird. Die Antennenstruktur des Siegelelements ist an sich, ohne die Bereitstellung des Koppelelements, voll funktionsfähig und bildet bereits ohne das Koppelelement einen elektrischen Schwingkreis. Die Parameter dieses Schwingkreises werden erfindungsgemäß durch das Bereitstellen der Koppelelemente gezielt beeinflusst, um dadurch ein individuelles Merkmal des Objekts, d.h. ein Echtheitsmerkmal, zu erhalten.

Um das zu sichernde Objekt eindeutig zu kennzeichnen, wird nun in einem weiteren Schritt das Siegelelement und, falls noch nicht geschehen, dass zumindest eine Koppelelement, derart an dem Objekt angeordnet, dass eine relative Anordnung der Antennenstruktur zu dem zumindest einen Koppelelement an dem Objekt festgelegt wird. Dadurch wird der Wert des Schwingkreisparameters der an dem Objekt angeordneten Antennenstruktur eindeutig abhängig von der festgelegten relativen Anordnung der Antennenstruktur zu dem zumindest einen Koppelelement definiert. Daher kann dieser Wert des Schwingkreisparameters als Echtheitsmerkmal des mittels des Siegelelements gesicherten Objekts fungieren. Ein Ablösen und wieder Anbringen des Siegelelements auf dem Objekt kann dann daran erkannt werden, dass bereits eine geringfügig abweichende Anordnung des Siegelelements relativ zu den unverändert angeordneten Koppelelementen im Vergleich zu der ursprünglichen Anordnung einen veränderten Wert des Schwingkreisparameters nach sich zieht.

Ein beschriebenes Siegelelement kann sehr einfach und kostengünstig hergestellt werden, da als Antennenstruktur beispielsweise lediglich eine einfache Antennenspule aufgebracht werden muss. Auch die beschriebenen Koppelelemente der können einfach und kostengünstig bereitgestellt und auf das zu sichernde Objekt aufgebracht oder an das zu sichernde Objekt angebracht werden.

Mittlerweile sind auch nachstehend noch im Detail beschriebene Verfahren bekannt, welche es auf einfache und kostengünstige Weise möglich machen, den Wert eines Schwingkreisparameters präzise zu messen. Folglich kann das erfindungsgemäße Verfahren effektiv und kostengünstig zur Fälschungssicherung dienen und auch solche Manipulationsversuche erkennen Lassen, welche aus einem zerstörungsfreien Ablösen und einem Wiederaufbringen des Siegelelements auf das Objekt bestehen.

Erfindungsgemäß umfasst das Verfahren die folgenden weiteren Schritte: der Wert des Schwingkreisparameters der an dem Objekt relativ zu dem zumindest einen Koppelelement angeordneten Antennenstruktur wird mittels einer Messvorrichtung gemessen. Der gemessene Wert wird dann dem Objekt mit dem daran angeordneten Siegelelement als Echtheitsmerkmal des Objekts zugeordnet.

Der Schritt des Zuordnens des gemessenen Wertes zu dem Objekt mit dem daran angeordneten Siegelelement kann gemäß einer bevorzugten Variante folgende Teilschritte umfassen:
Es wird ein Siegelbezeichner des Siegelelements und/oder ein Objektbezeichner des mittels des Siegels gesicherten Objekts ausgelesen. Das Auslesen erfolgt vorzugsweise automatisch mittels einer geeigneten Ausleseeinrichtung. Der gemessene Wert des Schwingkreisparameters wird dann zusammen mit dem ausgelesenen Bezeichner in einer Speichereinrichtung einer geeigneten Messvorrichtung gespeichert.

Gemäß einer bevorzugten Variante wird der gemessene Wert des Schwingkreisparameters durch die Messvorrichtung nicht angezeigt, um Manipulationsversuche zu verhindern. Weiter bevorzugt ist es, den gemessenen Wert zusammen mit dem ausgelesenen Bezeichner in der Messvorrichtung in verschlüsselter Form zu speichern. Auf diese Weise kann es verhindert werden, dass beim Übertragen des gemessenen Wertes und des damit gespeicherten Bezeichners an einen späteren Empfänger des Objekts eine Manipulation an den übertragenen Daten vorgenommen werden kann.

Wie bereits angedeutet, kann in einem weiteren Schritt der gemessene Wert des Schwingkreisparameters zusammen mit dem ausgelesenen Wert des Siegelbezeichners und/oder des Objektbezeichners an einen späteren Empfänger des Objekts übertragen werden. Der Empfänger des Objekts kann den empfangenen Wert zusammen mit dem empfangenen Bezeichner als Referenzwert speichern. Vorstellbar ist hier beispielsweise eine Konstellation, in der eine Banknotenkassette als Objekt mittels des Siegelelements gesichert wird, beispielsweise in einem Supermarkt. Der spätere Empfänger des Objekts kann dann beispielsweise ein Cash-Center oder eine Bank sein, zu der die gesicherte Banknotenkassette zur Weiterbearbeitung übermittelt wird.

Diese Schritte sind vorbereitende Schritte, welche den späteren Empfänger des Objekts in die Lage versetzen, in der nachstehend beschriebenen Weise das empfangene Objekt dahingehend zu prüfen, ob eine Manipulation an dem Siegel vorgenommen worden ist oder nicht.

Nach dem Empfangen des Objekts durch den Empfänger kann dieser einen Siegelbezeichner des Siegelelements und/oder einen Objektbezeichner des empfangenen Objekts auslesen. Weiterhin kann der Empfänger den Wert des Schwingkreisparameters der an dem empfangen Objekt relativ zu dem zumindest einen Koppelelement angeordneten Antennenstruktur mittels einer geeigneten Messvorrichtung messen. Schließlich wird der Empfänger den aktuell gemessenen Wert mit einem zu dem ausgelesenen Bezeichner gespeicherten Referenzwert vergleichen. Dazu kann eine geeignete Vergleichsvorrichtung verwendet werden.

Dieser Vergleichsschritt ermöglicht dem Empfänger eine Prüfung dahingehend, ob das Siegel manipuliert worden ist. D.h. es kann auch erkannt werden, ob das Siegel von dem Objekt entfernt und wieder auf das Objekt aufgebracht worden ist. Sobald der gemessene Wert nur geringfügig von dem gespeicherten Referenzwert abweicht, deutet dies darauf hin, dass die Anordnung des Siegels auf dem vom Empfänger empfangenen Objekt nicht mehr mit der ursprünglichen Anordnung des Siegels auf dem Objekt übereinstimmt. Es versteht sich, dass in diesem Vergleichsschritt auch eine Zerstörung des Siegels, insbesondere ein Leiterbahnbruch der Antennenstruktur des Siegels, zuverlässig erkannt werden kann. Solch eine Zerstörung des Siegels ist anhand des Wertes des gemessenen Schwingkreisparameters auf einfache Weise erkennbar.

Der Schritt des Messens des Wertes des Schwingkreisparameters, sowohl beim ersten Messen nach dem Anordnen des Siegelelements relativ zu dem zumindest einen Koppelelement zum Bilden des Echtheitsmerkmals, aber auch nachfolgend beim Messen beim Empfänger des Objekts zum Verifizieren der Unversehrtheit des Siegels, kann vorteilhaft in der folgenden Weise durchgeführt werden.

Die Antennenstruktur des Siegelelements, welche als elektrischer Schwingkreis angesehen wird, kann durch eine Erregerantenne einer Messvorrichtung mittels eines Energiepulses angeregt werden. Nachfolgend wird eine abklingende Schwingung der Antennenstruktur, d.h. des Schwingkreises, in Antwort auf die Anregung durch den Energiepuls mittels einer Messantenne der Messvorrichtung erfasst. Die erfasste Schwingung der Antennenstruktur wird schließlich hinsichtlich des Wertes des Schwingkreisparameters mittels einer geeigneten Auswertungseinrichtung der Messvorrichtung ausgewertet.

Vorzugsweise erfolgt dabei das Anregen der Antennenstruktur als induktives Anregen mittels eines gepulsten Magnetfeldes. Das Magnetfeld wird dabei vorzugsweise durch einen einzelnen Strompuls erzeugt. Der Strompuls kann dabei vorzugsweise als Gleichstrompuls in Form eines Dirac-Stoßes erzeugt werden.

Dieses Messverfahren eignet sich in besonderer Weise für das erfindungsgemäße Verfahren zur Fälschungssicherung, da es mittels einer sehr einfachen Messvorrichtung durchgeführt werden und den Wert des relevanten Schwingkreisparameters mit hinreichender Präzision messen kann.

Eine bevorzugte Ausführungsform eines erfindungsgemäßen Systems zur Fälschungssicherung eines Objekts umfasst demnach ein Siegelelement mit einer Antennenstruktur, insbesondere einer Spule, und zumindest ein an dem Objekt anordenbares oder an dem Objekt angeordnetes Koppelelement.

Das zumindest eine Koppelelement ist vorgesehen und eingerichtet, einen Wert eines Schwingkreisparameters der Antennenstruktur zu beeinflussen, wenn die Antennenstruktur relativ zu dem Koppelelement an dem Objekt angeordnet wird. Das Siegelelement und das zumindest eine Koppelelement sind vorgesehen und eingerichtet, an dem zu sichernden Objekt derart angeordnet zu werden, dass eine relative Anordnung der Antennenstruktur zu dem zumindest einen Koppelelement an dem Objekt eindeutig festgelegt wird. Dadurch wird der Wert des Schwingkreisparameters der an dem Objekt angeordneten Antennenstruktur abhängig von der erwähnten relativen Anordnung eindeutig definiert.

Die Antennenstruktur des Siegelelements und das zumindest eine Koppelelement können dabei auf einem gemeinsamen Träger angeordnet sein. Dieser Träger kann beispielsweise das Siegelelement selbst sein. Das Siegelelement kann beispielsweise in der Weise ausgebildet sein, dass es in Form eines Aufklebers beispielsweise an einem Deckel eines zu sichernden Objekts angeordnet werden kann. Die Anordnung kann dabei derart erfolgen, dass beispielsweise der Anteil des Siegelelements, welcher das zumindest eine Koppelelement trägt, an der Unterseite des Deckels angeordnet wird, und der Anteil des Siegelelements, welcher die Antennenstruktur trägt, an der Oberseite des Deckels angeordnet wird. Die relative Lage der Antennenstruktur zu dem Koppelelement ist daher, solange das Siegelelement noch nicht endgültig an dem Objekt angeordnet ist, variabel und kann beim Anordnen des Siegelelements an dem zu sichernden Objekt in eindeutiger Weise festgelegt werden.

Gemäß einer alternativen, bevorzugten Variante liegen die Antennenstruktur des Siegelelements und dass zumindest eine Koppelelement auf unterschiedlichen, separaten Trägern vor. Das Siegelelement kann dabei beispielsweise lediglich die Antennenstruktur umfassen. Auf einem separaten Träger können ein oder mehrere Koppelelemente vorliegen. Weiterhin ist es möglich, dass jedes oder einzelne aus einer Mehrzahl von Koppelelementen auf einem separaten Träger vorliegen oder keinen separaten Träger benötigen, sondern, direkt an dem Objekt anordenbar sind. Diese Ausführungsform erlaubt es insbesondere, viele verschiedene Anordnungen der Antennenstruktur des Siegelelements relativ zu dem zumindest einen Koppelelement an dem Objekt zu erreichen.

Wie bereits erwähnt, kann gemäß einer Ausführungsform ein Koppelelement als ein solches Element bereitgestellt werden, welches auf den Schwingkreis, der durch die Antennenstruktur des Siegelelements bereitgestellt wird, als zusätzliche Kapazität wirkt. Das Koppelelement kann beispielsweise als eine metallische Fläche vorliegen, z.B. als Alu- oder Ferritfolie. Wie erwähnt, können solche metallischen Flächen, beispielsweise als Folienelemente, auch ohne separaten Träger vorliegen. Alternativ kann ein Träger bereitgestellt werden, welcher eine Mehrzahl solcher Koppelelemente umfasst.

Gemäß einer anderen Ausführungsform kann das Koppelelement als ein Element vorgesehen sein, welches für den durch die Antennenstruktur des Siegelelements bereitgestellten Schwingkreis als zusätzliche Induktivität wirkt. Insbesondere kann das Koppelelement als eine Spule ausgebildet sein. In der Regel wird eine solche Spule auf einem separaten Träger vorliegen, beispielsweise in gedruckter Form, welcher dann an dem Objekt angeordnet werden kann.

Schließlich ist es beispielsweise möglich, dass das Koppelelement ein Material umfasst mit einer vorgegebenen, gegenüber dem umgebenden Bereich erhöhten Primitivität. Auch auf diese Weise lässt sich ein Schwingkreisparameter der Antennenspule des Siegelelements beeinflussen.

Sämtliche Ausführungsformen der beschriebenen Koppelelemente, welche auch kombiniert werden können, haben die Wirkung, dass sie, wenn sie in relativer Nähe zu der Antennenstruktur des Siegelelements an dem Objekt angeordnet werden, die Schwingkreiseigenschaften des durch die Antennenstruktur bereitgestellten Schwingkreises beeinflussen. Jede Änderung der relativen Lage der Antennenstruktur zu dem zumindest einen Koppelelement ändert daher den Wert eines Schwingkreisparameters der Antennenstruktur.

Gemäß einer weiteren bevorzugten Ausführungsform wird eine Mehrzahl von Koppelelementen verwendet, welche auf dem zu sichernden Objekt in unregelmäßiger, vorzugsweise zufälliger Weise angeordnet werden. Um den erfindungsgemäß erwünschten Effekt zu erhalten, dass eine veränderte relative Anordnung der Antennenstruktur zu dem zumindest einen Koppelelement einen veränderten Wert eines Schwingkreisparameters nach sich zieht, ist es erforderlich, dass das Koppelelement derart ausgebildet ist, dass es, wenn die Antennenstruktur relativ dazu angeordnet ist, in Bereich der Antennenstruktur Unregelmäßigkeiten oder Inhomogenitäten bereitstellt.

Dazu kann beispielsweise ein Träger bereitgestellt werden, welcher eine Mehrzahl von in unregelmäßiger oder zufälliger Weise angeordneten Koppelelementen umfasst. Die Unregelmäßigkeit der Koppelelemente kann dabei verschiedene Parameter betreffen, wie beispielsweise die Größe, die Form oder das Material der Koppelelemente sowie auch die relative Lage der Koppelelemente zueinander auf dem Träger.

Vorzugsweise wird das zumindest eine Koppelelement an einem zu sichernden Objekt derart angeordnet, dass es bei äußerlicher Betrachtung des Objekts nicht erkennbar ist. Auf diese Weise wird es demjenigen, der eine Manipulation des Objekts durch Ablösen des Siegels und nachträgliches Wiederaufbringen des Siegels unternimmt, erschwert, dem beschriebenen Verfahren entgegenzuwirken. Offensichtlich ist es umso schwerer, ein abgelöstes Siegel in der ursprünglichen Anordnung relativ zu den Koppelelementen erneut anzuordnen, wenn die Koppelelemente nicht erkennbar sind.

Gemäß einer weiteren Variante umfasst das erfindungsgemäße System daher das zu sichernde Objekt, und das zumindest eine Koppelelement ist derart an dem Objekt angeordnet, dass das Koppelelement bei äußerlicher Betrachtung des Objekts nicht erkennbar ist.

Wie bereits erwähnt, wird die Antennenstruktur des Siegelelements vorzugsweise in Form einer Spule ausgebildet. Eine solche Spule umfasst dabei zumindest eine Spulenwindung. Die Spule kann beispielsweise auf das Siegelelement aufgedruckt oder in ein mehrschichtiges Siegelelement eingebettet werden. Geeignet ist insbesondere eine offene Spule, da diese besonders empfindlich gegenüber Kapazitätsveränderungen ist. Es kann jedoch auch eine geschlossene Spule verwendet werden. Zwischen den Spulenenden kann dann eine Mäanderfläche eingefügt werden, welche eine zusätzliche Möglichkeit einer stärkeren Kapazitätskopplung mit dem zumindest einen Koppelelement bereitstellt.

Vorzugsweise umfasst das Siegelelement einen eindeutigen Siegelbezeichner. Mittels des Siegelbezeichners kann das mit dem Siegel versehene Objekt eindeutig gekennzeichnet werden. Alternativ oder zusätzlich kann auch das Objekt einen eindeutigen Objektbezeichner umfassen. Die Bezeichner sind dabei in der Regel derart ausgebildet, dass sie automatisch mittels einer geeigneten Ausleseeinrichtung ausgelesen werden können. Barcodes oder ähnliche Kodierungen eignen sich hierzu.

Das erfindungsgemäße System umfasst daher weiterhin eine Messvorrichtung mit einer Speichereinrichtung. Die Messvorrichtung ist eingerichtet, wenn das Siegelelement und das zumindest eine Koppelelement relativ zueinander an dem zu sichernden Objekt angeordnet sind, einen Siegelbezeichner des Siegelelements und/oder einen Objektbezeichner des Objekts mittels einer Ausleseeinrichtung auszulesen. Als Ausleseeinrichtung kann beispielsweise ein Barcode-Leser oder dergleichen verwendet werden.

Weiterhin ist die Messvorrichtung eingerichtet, den Wert des Schwingkreisparameters der an dem Objekt angeordneten Antennenstruktur zu messen. Eine bevorzugte Ausführungsform einer solchen Messvorrichtung wird nachfolgend noch genauer beschrieben.

Schließlich ist die Messvorrichtung eingerichtet, den gemessenen Wert zusammen mit dem ausgelesenen Bezeichner in der Speichereinrichtung zu speichern. Die Messvorrichtung kann weiterhin eingerichtet sein, die gemessenen und ausgelesenen Werte an einen zukünftigen Empfänger des Objekts zu übertragen. Vorzugsweise erfolgt die Speicherung des gemessenen Wertes und des oder der ausgelesenen Bezeichner sowie die Übertragung derselben, wie bereits erwähnt, in verschlüsselter Form.

Eine solche Messvorrichtung, auf Seiten des Empfängers des Objekts verwendet, ist vorzugsweise eingerichtet, einen Siegelbezeichner des Siegelelements und/oder einen Objektbezeichner des Objekts mittels der Ausleserichtung auszulesen und den Wert des Schwingkreisparameters der an dem empfangenen Objekt angeordneten Antennenstruktur zu messen. Weiterhin ist die Messvorrichtung eingerichtet, den gemessenen Wert mit einem in der Speichereinrichtung zusammen mit dem ausgelesenen Bezeichner gespeicherten Referenzwert zu vergleichen. Dieser Vergleich dient dazu, wie vorstehend bereits beschrieben, zu prüfen, ob das Siegel des Objekts manipuliert worden ist.

Eine bevorzugte Ausführungsform der Messvorrichtung umfasst eine Erregerantenne zum Anregen der als Schwingkreis angesehenen Antennenstruktur des Siegelelements mittels eines Energiepulses. Weiterhin umfasst die Messvorrichtung eine Messantenne zum Erfassen einer abklingenden Schwingung der Antennenstruktur in Antwort auf die Anregung durch den Energiepuls. Schließlich umfasst die Messvorrichtung eine Auswertungseinrichtung zum Auswerten der erfassten Schwingung der Antennenstruktur hinsichtlich des Wertes des Schwingkreisparameters. Es ist jedoch auch denkbar, eine Antenne als Erreger- und Messantenne zu nutzen und/oder eine gemeinsame Erreger- und Messeinheit vorzusehen.

Die vorliegende Erfindung wird im Folgenden mit Bezug auf die beiliegenden Zeichnungen beispielhaft beschrieben. Darin zeigen:
- Figur 1A und 1B: bevorzugte Ausführungsformen eines erfindungsgemä-ßen Siegelelements;
- Figur 2A und 2B: Trägerelemente, welche bevorzugte Ausführungsformen erfindungsgemäßer Koppelelemente umfassen;
- Figur 3A: ein zu sicherndes Objekt in Form eines Behälters mit einem aufklappbaren Deckel;
- Figuren 3B und 3C: den Deckel des Behälters aus Figur 3A in Draufsicht mit daran angeordneten Koppelelementen und einem jeweils in in-dividueller Lage angeordneten Siegelelement aus Fig. 1A;
- Figur 4: eine bevorzugte Ausführungsform einer erfindungsgemäßen Messvorrichtung;
- Figur 5: schematisch den Verlauf einer freien gedämpften Schwingung und
- Figuren 6 und 7: Schritte einer bevorzugten Ausführungsform eines er-findungsgemäßen Verfahrens zur Fälschungssicherung eines Objekts.

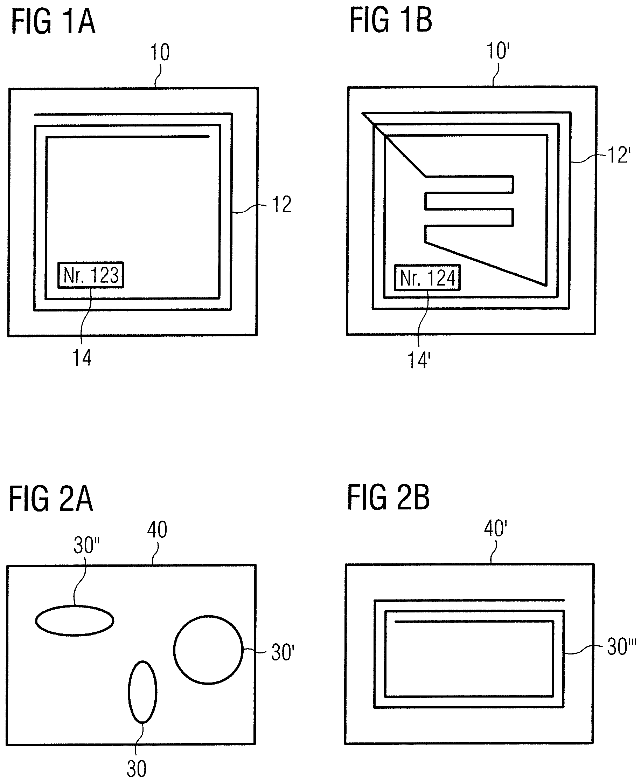

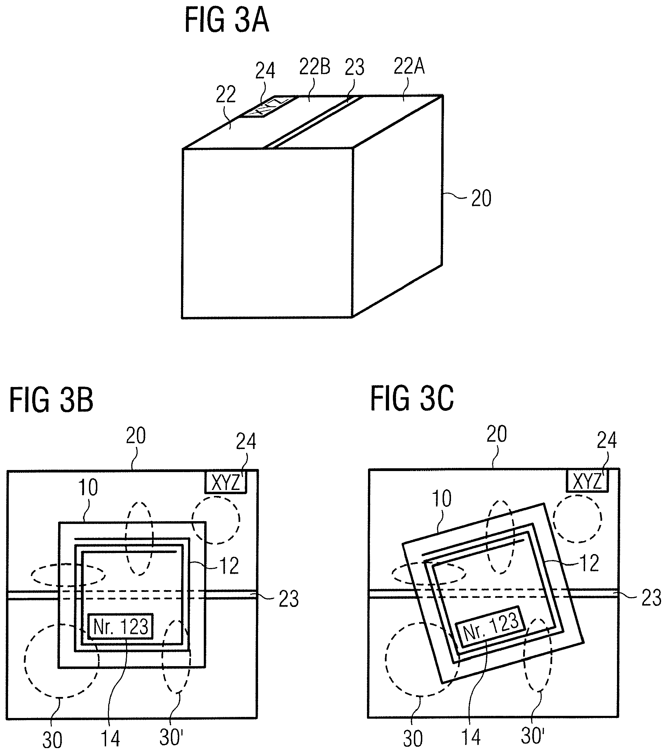

In Figur 1A ist eine erste Ausführungsform eines Siegelelements 10 gezeigt, welches geeignet ist, auf ein zu sicherndes Objekt 20 (vgl. Fig. 3B, 3C) aufgebracht, beispielsweise aufgeklebt, zu werden. Das Siegelelement 10 kann insbesondere derart aufgeklebt werden, dass es bei einer Manipulation des Objekts 20 zerstört wird, beispielsweise wenn es über einen Deckel 22 eines Objekts 20 derart geklebt wird, dass das Siegel 10 beim Öffnen des Deckels 22 notwendigerweise zerstört wird.

Das Siegelelement 10 umfasst ein Trägerelement, beispielsweise aus Papier oder Kunststoff, sowie eine auf dem Trägerelement angeordnete Antennenstruktur 12, im gezeigten Beispiel in Form einer offenen Spule. Weiterhin umfasst das Siegelelement 10 einen Siegelbezeichner 14, welcher das Siegelelement 10 in eindeutiger Weise kennzeichnet.

Das in Figur 1B dargestellte Siegelelement 10' unterscheidet sich von dem Siegelelement 10 aus Figur 1A dahingehend, dass die Antennenstruktur 12' als eine geschlossene Spule 12 vorliegt, wobei der Anteil, der die beiden Spulenenden (vgl. Fig. 1A) verbindet, eine Mäanderstruktur umfasst. Beide Spulen 12, 12' sind für Kapazitätseinflüsse, welche durch relativ zu den Spulen 12, 12' angeordnete Koppelelemente 30 bereitgestellt werden, besonders empfindlich.

In Figur 2A ist ein Träger 40 dargestellt, welcher eine Mehrzahl als Kapazität wirkende Koppelelemente 30, 30', 30" umfasst. Die Koppelelemente 30, 30', 30" liegen als metallische Flächen vor, welche jeweils eine verschiedene Größe und Form aufweisen und auf dem Träger 40 in zufälliger Weise angeordnet sind. Anzahl, Form, Material und relative Anordnung der Koppelelemente kann variieren.

In Figur 2B ist ein Träger 40' dargestellt, der ein Koppelelement 30"' trägt, welches in Form einer Spule vorliegt. Ein solches Koppelelement kann im Zusammenhang mit dem nachstehend beschriebenen Verfahren als zusätzliche Induktivität wirken, die ebenfalls Einfluss auf einen Schwingkreisparameter der Antennenstruktur 12 des Siegelelements 10 nehmen kann.

In Figur 3A ist exemplarisch ein zu sicherndes Objekt 20 in Form eines Behälters dargestellt. Der Behälter 20 kann beispielsweise eine Banknotenkassette oder dergleichen darstellen, welche einen Deckel 22 umfasst, der geöffnet werden kann. Deckel 22 ist zweiteilig ausgebildet und umfasst die Anteile 22A und 22B. Zwischen den Deckelanteilen ist ein Spalt 23 angedeutet. Um den Behälter 20 vor Manipulationen zu sichern, kann nun ein Siegelelement 10, wie es in Figur 1 angezeigt ist, derart auf den Deckel 22 geklebt werden, dass der Spalt 23 abgedeckt wird. Bei einem Öffnen des Deckels 22 würde also in der Regel ein darauf aufgeklebtes Siegel 10 zerstört werden.

In den Figuren 3B und 3C ist der Behälter 20 aus Figur 3A in Draufsicht gezeigt. Zum Sichern des Objekts 20 sind dabei zum einen auf der Unterseite der Deckelanteile 22A und 22B eine Mehrzahl von Koppelelementen 30, 30' angeordnet worden. Die gestrichelte Darstellung der Koppelelemente 30, 30' soll andeuten, dass diese für einen Betrachter äußerlich, d.h. bei geschlossenem Deckel 22, nicht erkennbar sind. Weiterhin ist in den Figuren 3B und 3C jeweils ein auf der Oberfläche des Deckels 22 angeordnetes Siegelelement 10 dargestellt. Die Figuren 3B und 3C unterscheiden sich lediglich dahingehend, dass in der Figur 3C das Siegelelement relativ zu den Koppelelementen anders angeordnet ist als in Figur 3B.

Aufgrund der Tatsache, dass die Koppelelemente 30 einen Schwingkreisparameter des durch die Antennenstruktur 12 gebildeten Schwingungskreises des Siegelelements 10 beeinflussen, wird eine Messung des Wertes des Schwingkreisparameters der Antennenstruktur 12, wie sie in Figur 3B auf dem Behälter 20 relativ zu den Koppelelementen 30, 30' angeordnet ist, einen anderen Wert ergeben als eine Messung in einer Anordnung gemäß Figur 3C. Wenn also beispielsweise ursprünglich zur Sicherung des Behälters 20 das Siegel 10 in einer Anordnung gemäß Figur 3B aufgebracht worden ist und nach einer Manipulation gemäß Figur 3C wieder auf dem Behälter angeordnet worden ist, so kann eine solche Manipulation mit dem nachfolgend beschriebenen Verfahren zweifelsfrei erkannt werden, auch dann, wenn das Siegel an sich unbeschädigt ist.

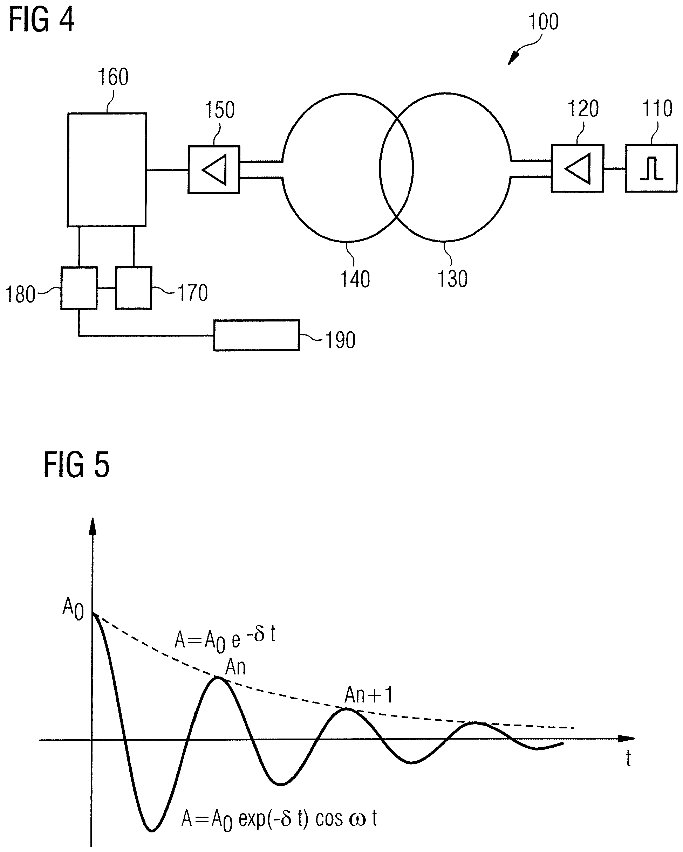

In Figur 4 ist eine bevorzugte Ausführungsform einer das nachfolgend beschriebene Verfahren unterstützenden Messvorrichtung 100 exemplarisch dargestellt. Die Messvorrichtung 100 kann zum Messen eines Schwingkreisparameters einer Antennenstruktur 12 eines Siegelelements 10 aus Figur 1A, 1B dienen.

Die Messvorrichtung 100 umfasst dabei einen Impulsgeber 110, der vorzugsweise über einen Verstärker 120 mit einer Erregerspule 130 verbunden ist. Mittels eines durch den Impulsgeber 110 erzeugten Energiepulses, vorzugsweise in Form eines Dirac-Stoßes, kann die Antennenstruktur 12 über die Erregerspule 130 kontaktlos angeregt werden, wenn die Erregerspule 130 geeignet relativ zu der Antennenstruktur 12 des Siegelelements 10 angeordnet wird.

Die Messantenne 140 ist eingerichtet, eine Schwingung der zu prüfenden Antennenstruktur 12 zu erfassen und vorzugsweise über einen Verstärker 150 an eine Auswertungseinrichtung 160 weiterzuleiten. Die Erregerspule 130 und die Messeantenne 140 sind für die Messung in geeignetem, vorzugsweise geringem Abstand neben der Antennenstruktur 12 des zu prüfenden Siegelelements 10 anzuordnen. Die Messantenne 140 erfasst die in Antwort auf die Anregung durch den Energiepuls abklingende Schwingung der Antennenstruktur 12.

Die Messvorrichtung 100 umfasst weiterhin eine Speichervorrichtung 180 und eine Vergleichseinrichtung 170 sowie eine Ausleseeinrichtung 190.

Die Ausleseeinrichtung 190 ist eingerichtet, einen Bezeichner 14 eines zu prüfenden Siegels 10 oder einen Bezeichner 24 eines mittels des Siegels 10 gesicherten Objekts 20 (vgl. Fig. 3A) auszulesen. Die Ausleseeinrichtung 190 ist mit der Speichereinrichtung 180 verbunden, so dass ausgelesene Werte direkt in der Speichereinrichtung 180 gespeichert werden können.

Die Speichereinrichtung 180 ist weiter eingerichtet, einen Messwert eines gemessenen Schwingkreisparameters eines geprüften Siegelelements 10, welchen die Auswertungseinrichtung 160 ermittelt hat, zu speichern. Eine Speicherung eines Messwertes erfolgt vorzugsweise zusammen mit der Speicherung eines Bezeichners 14 des entsprechenden Siegelelements 10 bzw. des Bezeichners 24 des Objekts 20, auf welchem das Siegelelement 10 aufgebracht ist, dessen Antennenstruktur 12 den gemessenen Parameterwert aufweist.

Die Vergleichseinrichtung 170 ist eingerichtet, einen gemessenen Wert eines Schwingkreisparameters eines Siegelelements 10, welchem ein ausgelesener Bezeichner 14, 24 zugeordnet wird, mit einem gespeicherten Referenzmesswert zu vergleichen, der zu dem ausgelesenen Bezeichner in der Speichereinrichtung gespeichert ist.

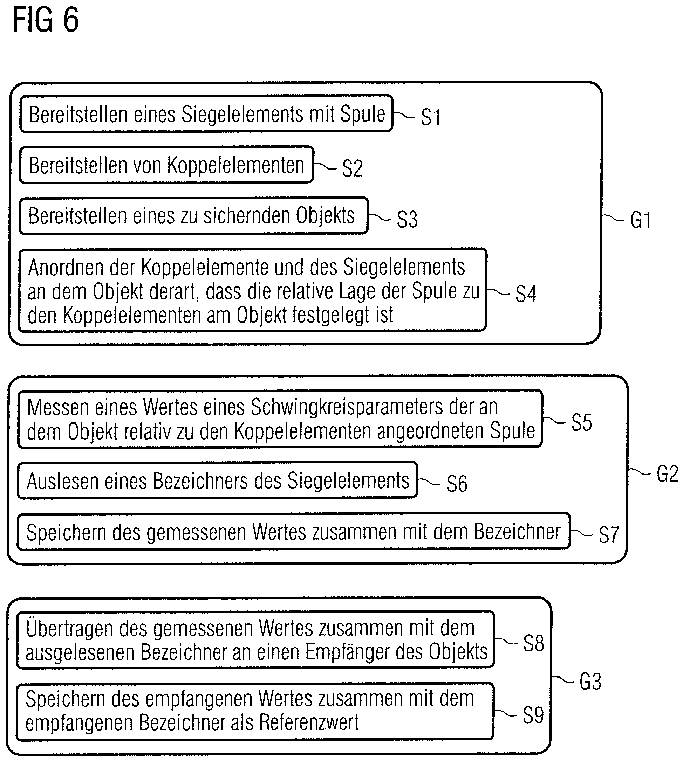

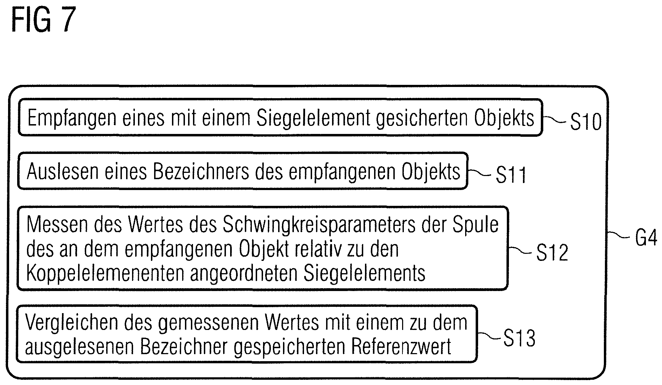

Die Verwendung der einzelnen Komponenten der Messvorrichtung 100 wird nachfolgend mit Bezug auf das Verfahren gemäß den Figuren 6 und 7 nochmals verdeutlicht.

Figur 5 zeigt den theoretischen Verlauf einer freien, gedämpften Schwingung A(t) im Verlauf der Zeit t. Die Funktion A(t) kann dabei dem Strom I oder der Spannung U entsprechen. Die Kreisfrequenz ω entspricht einer Resonanzfrequenz der Antennenstruktur 12 multipliziert mit 2n. Aus dem Abklingkoeffizienten δ kann die Güte der Antennenstruktur 12 bestimmt werden. Eine entsprechend abklingende Schwingung entsteht in Antwort auf die vorliegend beschriebene Anregung mittels eines Energiepulses.

Mit Bezug auf die Figuren 6 und 7 werden im Folgenden Schritte einer bevorzugten Ausführungsform eines Verfahrens zur Fälschungssicherung eines Objekts 20 mittels eines Siegelelements 10 beschrieben.

Die Schritte der ersten Gruppe G1 dienen dabei dazu, das Objekt 20 in eindeutiger Weise zu sichern und mit einem Echtheitsmerkmal auszustatten.

Mit den Schritten der Gruppe G2 wird das Echtheitsmerkmal, nämlich der eindeutig definierte Wert eines Schwingkreisparameters der Antennenstruktur 12 des Siegelelements 10, welche sich aus einer spezifisch definierten relativen Anordnung der Antennenstruktur 12 relativ zu den Koppelelementen 30 ergibt, gemessen und dem mittels des Siegelelements 10 gesicherten Objekt 20 zugeordnet.

Die Schritte der Gruppe G3 dienen dazu, die ermittelten Werte einem zukünftigen Empfänger des gesicherten Objekts 20 zukommen zu lassen, so dass dieser auf Basis der empfangenen Informationen ein empfangenes Objekt 20 nachfolgend prüfen kann.

Schritte einer solchen Prüfung sind schließlich mit Bezug auf die Gruppe G4 in Figur 7 dargestellt.

Im Einzelnen umfassen die verschiedenen Gruppen die folgenden Schritte:
In einem ersten Schritt S1 wird ein Siegelelement 10 mit einer Antennenstruktur, z.B. einer Spule 12, bereitgestellt. Weiterhin wird zumindest ein Koppelelement 30 bereitgestellt, beispielsweise auf einem oder mehreren Trägern 40, wie sie in Figur 2A und 2B dargestellt sind. In einem Schritt S3 wird ein zu sicherndes Objekt 20 bereitgestellt, wie beispielsweise ein Behälter 20 aus Figur 3A.

In Schritt S4 werden nun die Koppelelemente 30 und das Siegelelement 10 derart an dem Objekt 20 angeordnet, dass die relative Anordnung der Spule 12 zu dem zumindest einen Koppelelement 30 am Objekt 20 eindeutig festgelegt ist. Eine solche Anordnung ist z.B. in Figur 3B exemplarisch dargestellt.

Nach einem Durchführen der Schritte S1 bis S4 ist das Objekt 20 durch das Siegelelement 10 und die relativ dazu eindeutig angeordneten Koppelelemente 30 in eindeutiger Weise gekennzeichnet. Ein Schwingkreisparameter der Antennenstruktur 12, z.B. dessen Güte, kann daher als Echtheitsmerkmal des gesicherten Objekts 20 verwendet werden.

In Schritt S5, der den ersten Schritt der Gruppe G2 darstellt, wird nun ein Wert eines Schwingkreisparameters der an dem Objekt 20 relativ zu den Koppelelementen 30 angeordneten Spule 12 gemessen. Als Schwingkreisparameter kann dabei insbesondere eine Güte Q oder eine Eigenresonanzfrequenz der Spule 12 dienen. Zum Messen des Wertes wird vorzugsweise die Messvorrichtung 100 aus Figur 4 verwendet. Dabei wird die Antennenstruktur 12 durch die Erregerantenne 130 mittels eines Energiepulses angeregt. Eine abklingende Schwingung der Antennenstruktur 12 in Antwort auf die Anregung durch den Energiepuls wird dann mittels der Messantenne 140 erfasst. Die Auswertungseinrichtung 160 wertet die erfasste Schwingung aus und bestimmt daraus den Wert des Schwingkreisparameters der Antennenstruktur 12.

In Schritt S6 wird der Bezeichner 14 des Siegelelements 10 ausgelesen und in Schritt S7 wird der in Schritt S5 gemessene Wert des Schwingkreisparameters zusammen mit dem ausgelesenen Bezeichner 14 in der Speichervorrichtung 180 als Echtheitsmerkmal des gesicherten Objekts 20 gespeichert. Alternativ oder zusätzlich kann auch ein Bezeichner 24 des Objekts in Schritt S6 ausgelesen und in Schritt S7 zusammen mit dem gemessenen Wert gespeichert werden. Vorzugsweise wird der gemessene Wert durch die Messvorrichtung 100 nicht angezeigt, um Manipulationen zu verhindern. Die Messvorrichtung 100 kann beispielsweise lediglich anzeigen, dass eine Messung erfolgreich erfolgt ist. In der Regel wird der gemessene Wert zusammen mit dem ausgelesenen Bezeichner 14, 24 in verschlüsselter Form gespeichert. Auch dies dient dazu, Manipulationen der gemessenen und ausgelesenen Werte zu verhindern.

In Schritt S8 wird der in Schritt S5 gemessene Wert zusammen mit dem in Schritt S6 ausgelesenen Bezeichner 14 an einen zukünftigen Empfänger des Objekts 20 übertragen, vorzugsweise ebenfalls in verschlüsselter Form. Der Empfänger speichert die empfangenen Daten, vorzugsweise in einer Speichereinrichtung 180 einer Messvorrichtung 100 nach Fig. 4. Es versteht sich, dass der Empfänger in der Lage ist, die verschlüsselt empfangenen Daten zu entschlüsseln. Der empfangene gemessene Wert dient dem Empfänger, wie nachfolgend mit Bezug auf die Schritte S10 bis S13 der Gruppe G4 noch erläutert, als Referenzwert beim Prüfen eines zukünftig empfangenen Objekts.

Nachdem der Empfänger ein mittels des Siegelelements 10 gesichertes Objekt 20 in Schritt S10 empfangen hat, liest er in Schritt S11 einen Bezeichner 14 des auf dem Objekt 20 angeordneten Siegelelements 10 bzw. einen Bezeichner 24 des Objekts 20 aus. Weiterhin wird auf Seiten des Empfängers in Schritt S12 der Wert des Schwingkreisparameters der Spule 12 des auf dem empfangen Objekt 20 relativ zu den Koppelelement 30 angeordneten Siegelelements gemessen. Vorzugsweise verwendet auch der Empfänger dazu, wie erwähnt, eine Messvorrichtung gemäß Figur 4, in deren Speichereinrichtung 180 die in Schritt S9 gespeicherten Daten, d.h. der Referenzwert zusammen mit dem entsprechenden Bezeichner 14, 24 des Siegels 10 bzw. des mittels des Sieges 10 gesicherten Objekts 20, gespeichert sind.

In Schritt S13 schließlich vergleicht der Empfänger den an dem empfangen Objekt 20 gemessenen Wert des Schwingkreisparameters mit dem zu dem ausgelesenen Bezeichner 14, 24 gespeicherten Referenzwert. In dem Fall, dass die beiden Werte, das heißt der Referenzwert und der gemessene Wert, im Wesentlichen, bis auf Messtoleranzen, übereinstimmen, kann davon ausgegangen werden, dass das Objekt 20 nicht manipuliert worden ist und dass das Siegel noch in der unveränderten Weise, wie es ursprünglich in Schritt S4 auf dem Objekt 20 angeordnet worden ist, auf dem Objekt 20 vorliegt. In dem Fall allerdings, dass der gemessene Wert von dem Referenzwert signifikant abweicht, ist darauf zu schließen, dass das Siegelelement 10 zwischenzeitlich, das heißt bevor es den Empfänger erreicht hat, unerlaubt von dem Objekt 20 entfernt und nachträglich wieder angeordnet worden ist. Es ist in diesem Fall von einer Manipulation des Objekts 20 auszugehen.

Es versteht sich, dass auch eine Beschädigung des Siegels 10, insbesondere eine Beschädigung der Spule 12, beispielsweise durch einen Leiterbahnbuch, anhand des gemessenen Wertes im Vergleich zum Referenzwert eindeutig erkannt werden kann, wenn dies dem Siegel nicht bereits durch optische Prüfung entnehmbar ist.

## Patentansprüche

1. Verfahren zur Fälschungssicherung eines Objekts (20), umfassend die Schritte:
- Bereitstellen (S1) eines Siegelelements (10) mit einer Antennenstruktur (12);
- Bereitstellen (S3) eines zu sichernden Objekts (20);
- Bereitstellen (S2) zumindest eines an dem Objekt (20) angeordneten oder an dem Objekt (20) anordenbaren Koppelelements (30),
- Anordnen (S4) des Siegelelements (10) und gegebenenfalls des zumindest einen Koppelelements (30) an dem Objekt (20) derart, dass eine relative Anordnung der Antennenstruktur (12) zu dem zumindest einen Koppelelement (30) an dem Objekt (20) festgelegt wird, wobei
das Koppelelement vorgesehen und geeignet ist, einen Wert eines Schwingkreisparameters der Antennenstruktur (12) zu beeinflussen, wenn die Antennenstruktur (12) relativ zu dem zumindest einen Koppelelement (30) an dem Objekt (20) angeordnet wird, und
durch das Anordnen der Wert des Schwingkreisparameters der an dem Objekt (20) angeordneten Antennenstruktur (12) abhängig von der festgelegten relativen Anordnung definiert wird,
**gekennzeichnet durch** die weiteren Schritte:
- Messen (S5) des Wertes des Schwingkreisparameters der an dem Objekt (20) relativ zu dem zumindest einen Koppelelement (30) angeordneten Antennenstruktur (12) mittels einer Messvorrichtung (100) und
- Zuordnen (S6, S7) des gemessenen Wertes zu dem Objekt (20) mit dem daran angeordneten Siegelelement (10) als Echtheitsmerkmal des Objekts (20).

2. Verfahren nach Anspruch 1, **dadurch gekennzeichnet, dass** der Schritt des Zuordnens (S6, S7) des gemessenen Wertes zu dem Objekt (20) mit dem daran angeordneten Siegelelement (10) folgende Teilschritte umfasst:
- Auslesen (S6) eines Siegelbezeichners (14) des Siegelelements (10) und/oder eines Objektbezeichners (24) des Objekts mittels einer Ausleseeinrichtung (190) und
- Speichern des gemessenen Wertes des Schwingkreisparameters zusammen mit dem ausgelesenen Siegelbezeichner (14) und/oder dem ausgelesenen Objektbezeichner (24) in eine Speichereinrichtung (180).

3. Verfahren nach Anspruch 2, **gekennzeichnet durch** die weiteren Schritte:
- Übertragen (S8) des gemessenen Wertes zusammen mit dem ausgelesenen Siegelbezeichner (14) und/oder dem ausgelesenen Objektbezeichner (24) an einen Empfänger des Objekts (20) und
- Speichern (S8) des empfangenen Werts zusammen mit dem empfangenen Siegelbezeichner (14) und/oder empfangenen Objektbezeichner (24) als Referenzwert beim Empfänger.

4. Verfahren nach Anspruch 3, **gekennzeichnet durch** die weiteren Schritte beim Empfänger des Objekts nach dem Empfangen (S10) des Objekts:
- Auslesen (S11) eines Siegelbezeichners (14) des Siegelelements (10) und/oder eines Objektbezeichners (24) des empfangenen Objekts (20) mittels einer Ausleseeinrichtung (190);
- Messen (S12) des Wertes des Schwingkreisparameters der an dem empfangenen Objekt (20) relativ zu dem zumindest einen Koppelelement (30) angeordneten Antennenstruktur (12) mittels einer Messvorrichtung (100) und
- Vergleichen (S13) des gemessenen Wertes mit einem zu dem ausgelesenen Siegelbezeichner (14) und/oder dem ausgelesenen Objektbezeichner (24) gespeicherten Referenzwert mittels einer Vergleichsvorrichtung (170).

5. Verfahren nach Anspruch 1 oder 4, **dadurch gekennzeichnet, dass** der Schritt des Messens (S5; S12) des Wertes folgende Teilschritte umfasst:
- Anregen der Antennenstruktur (12) durch eine Messvorrichtung (100) mittels eines Energiepulses;
- Erfassen einer abklingenden Schwingung der Antennenstruktur (12) in Antwort auf die Anregung durch den Energiepuls mit der Messvorrichtung (100) und
Auswerten der erfassten Schwingung der Antennenstruktur (12) hinsichtlich des Wertes des Schwingkreisparameters mittels der Messvorrichtung (100).

6. Verfahren nach Anspruch 5, **dadurch gekennzeichnet, dass** das Anregen der Antennenstruktur (12) als induktives Anregen mittels eines gepulsten Magnetfeldes erfolgt, wobei das Magnetfeld vorzugsweise durch einen einzelnen Strompuls erzeugt wird und/oder wobei der Strompuls vorzugsweise als Gleichstrompuls in Form eines Dirac-Stoßes erzeugt wird.

7. System zur Fälschungssicherung eines Objekts (20), umfassend
- ein Siegelelement (10) mit einer Antennenstruktur (12) und
- zumindest ein an dem Objekt (20) angeordnetes oder an dem Objekt (20) anordenbares Koppelelement (30), wobei das Siegelelement (10) und das zumindest eine Koppelelement (30) eingerichtet sind, an dem zu sichernden Objekt (20) derart angeordnet zu werden, dass eine relative Anordnung der Antennenstruktur (12) zu dem zumindest einen Koppelelement (30) an dem Objekt (20) festgelegt wird, wobei das Koppelelement vorgesehen und geeignet ist, einen Wert eines Schwingkreisparameters der Antennenstruktur (12) zu beeinflussen, wenn die Antennenstruktur (12) relativ zu dem Koppelelement (30) an dem Objekt (20) angeordnet wird, wobei durch das Anordnen der Wert des Schwingkreisparameters der an dem Objekt (20) angeordneten Antennenstruktur (12) abhängig von der festgelegten relativen Anordnung definiert wird,
**dadurch gekennzeichnet, dass** das System eine Messvorrichtung (100) mit einer Speichereinrichtung (180) umfasst, welche eingerichtet ist, wenn die Antennenstruktur (12) des Siegelelements (10) und das zumindest eine Koppelelement (30) relativ zueinander an dem zu sichernden Objekt (20) angeordnet sind,
- einen Siegelbezeichner (14) des Siegelelements und/oder einen Objektbezeichner (24) des Objekts (20) mittels einer Ausleseeinrichtung (190) auszulesen;
- den Wert des Schwingkreisparameters der an dem Objekt (20) angeordneten Antennenstruktur (12) zu messen;
- und den gemessenen Wert zusammen mit dem ausgelesenen Siegelbezeichner (14) und/oder dem ausgelesenen Objektbezeichner (24) in der Speichereinrichtung (180) zu speichern und/oder an einen Empfänger des Objekts (20) zu übertragen.

8. System nach Anspruch 7, **dadurch gekennzeichnet, dass** die Antennenstruktur des Siegelelements (10) und das zumindest eine Koppelelement (30) auf einem gemeinsamen Träger angeordnet sind.

9. System nach Anspruch 7, **dadurch gekennzeichnet, dass** die Antennenstruktur (12) des Siegelelements (10) und das zumindest eine Koppelelement (30) auf unterschiedlichen, separaten Trägern (10, 40) angeordnet sind.

10. System nach einem der Ansprüche 7 bis 9, **dadurch gekennzeichnet, dass** das zumindest eine Koppelelement (30) ein als Kapazität wirkendes Element, insbesondere eine metallische Fläche, umfasst, und/oder dass das zumindest eine Koppelelement ein als Induktivität wirkendes Element, insbesondere eine Spule, umfasst, und/oder dass das zumindest eine Koppelelement ein Material mit vorgegebener, gegenüber dem umgebenden Bereich erhöhter Permittivität umfasst.

11. System nach einem der Ansprüche 7 bis 10, **dadurch gekennzeichnet, dass** eine Mehrzahl von Koppelelementen (30; 30') auf einem Träger (40) vorliegen, wobei die Koppelelemente (30; 30') auf dem Träger (40) in unregelmäßiger, vorzugsweise zufälliger Weise angeordnet sind.

12. System nach einem der Ansprüche 7 bis 11, **dadurch gekennzeichnet, dass** die Messvorrichtung (100) eingerichtet ist, wenn die Antennenstruktur (12) des Siegelelements (10) und das zumindest eine Koppelelement (30) relativ zueinander an dem zu sichernden Objekt (20) angeordnet sind,
- einen Siegelbezeichner (14) des Siegelelements (10) und/oder einen Objektbezeichner (24) des Objekts (20) mittels der Ausleseeinrichtung (190) auszulesen;
- den Wert des Schwingkreisparameters der an dem Objekt (20) angeordneten Antennenstruktur (12) zu messen; und
- den gemessenen Wert mit einem in der Speichereinrichtung (180) zusammen mit dem ausgelesenen Siegelbezeichner (14) und/oder dem ausgelesenen Objektbezeichner (24) gespeicherten Referenzwert zu vergleichen.

13. System nach einem der Ansprüche 7 bis 12, **dadurch gekennzeichnet, dass** die Messvorrichtung (100) umfasst:
- eine Erregerantenne (130) zum Anregen der Antennenstruktur (12) mittels eines Energiepulses;
- eine Messantenne (140) zum Erfassen einer abklingenden Schwingung der Antennenstruktur (12) in Antwort auf die Anregung durch den Energiepuls und
eine Auswertungseinrichtung (160) zum Auswerten der erfassten Schwingung der Antennenstruktur (12) hinsichtlich des Wertes des Schwingkreisparameters.

## Claims

1. A method for securing an object (20) from forgery, comprising the steps:
- supplying (S1) a seal element (10) having an antenna structure (12);
- supplying (S3) an object to be secured (20);
- supplying (S2) at least one coupling element (30) arranged at the object (20) or arrangeable at the object (20),
- arranging (S4) the seal element (10) and, where applicable, the at least one coupling element (30) at the object (20) such that a relative arrangement of the antenna structure (12) to the at least one coupling element (30) at the object (20) is fixed, wherein
the coupling element is provided and suitable to influence a value of an oscillating circuit parameter of the antenna structure (12) when the antenna structure (12) is arranged relative to the at least one coupling element (30) at the object (20), and
by the arranging, the value of the oscillating circuit parameter of antenna structures (12) arranged at the object (20) is defined in dependence on the fixed relative arrangement, **characterized by** the further steps of:
- measuring (S5) the value of the oscillating circuit parameter of the antenna structure (12) arranged at the object (20) relative to the at least one coupling element (30) by means of a measuring apparatus (100) and
- associating (S6, S7) the measured value with the object (20) having the seal element (10) arranged thereto as an authentication feature of the object (20).

2. The method according to claim 1, **characterized in that** the step of associating (S6, S7) the measured value with the object (20) having the seal element (10) arranged thereto comprises the following substeps:
- reading out (S6) a seal identifier (14) of the seal element (10) and/or an object identifier (24) of the object by means of a read-out device (190) and
- storing the measured value of the oscillating circuit parameter together with the read-out seal identifier (14) and/or the read-out object identifier (24) in a storage device (180).

3. The method according to claim 2, **characterized by** the further steps:
- transferring (S8) the measured value together with the read-out seal identifier (14) and/or the read-out object identifier (24) to a receiver of the object (20) and
- storing (S8) of the received value together with the received seal identifier (14) and/or received object identifier (24) as a reference value at the receiver.

4. The method according to claim 3, **characterized by** the further steps at the receiver of the object after the receiving (S10) of the object:
- reading out (S11) a seal identifier (14) of the seal element (10) and/or an object identifier (24) of the received object (20) by means of a read-out device (190);
- measuring (S12) the value of the oscillating circuit parameter of the antenna structure (12) arranged at the received object (20) relative to the at least one coupling element (30) by means of a measuring apparatus (100) and
- comparing (S13) the measured value with a reference value stored to the read-out seal identifier (14) and/or the read-out object identifier (24) by means of a comparative apparatus (170).

5. The method according to claim 1 or 4, **characterized in that** the step of measuring (S5; S12) the value comprises the following substeps:
- exciting the antenna structure (12) by a measuring apparatus (100) by means of an energy pulse;
- capturing a decaying oscillation of the antenna structure (12) in response to the excitation by the energy pulse with the measuring apparatus (100) and
- evaluating the captured oscillation of the antenna structure (12) with regard to the value of the oscillating circuit parameter by means of the measuring apparatus (100).

6. The method according to claim 5, **characterized in that** the exciting of the antenna structure (12) is effected as an inductive exciting by means of a pulsed magnetic field, wherein the magnetic field is generated preferably by an individual current pulse and/or the current pulse is generated preferably as a direct current pulse in the form of a Dirac impulse.

7. A system for protecting an object from forgery (20), comprising
- a seal element (10) having an antenna structure (12) and
- at least one coupling element (30) arranged at the object (20) or arrangeable at the object (20), wherein the seal element (10) and the at least one coupling element (30) are devised to be arranged at the object to be secured (20) such that a relative arrangement of the antenna structure (12) to the at least one coupling element (30) at the object (20) is fixed, wherein the coupling element is provided and suitable to influence a value of an oscillating circuit parameter of the antenna structure (12) when the antenna structure (12) is arranged relative to the coupling element (30) at the object (20), wherein by the arranging, the value of the oscillating circuit parameter of antenna structures (12) arranged at the object (20) is defined in dependence on the fixed relative arrangement,
- **characterized in that** the system comprises a measuring apparatus (100) having a storage device (180) which is devised such, when the antenna structure (12) of the seal element (10) and the at least one coupling element (30) are arranged relative to each other at the object to be secured (20),
- to read out a seal identifier (14) of the seal element and/or an object identifier (24) of the object (20) by means of a read-out device (190);
- to measure the value of the oscillating circuit parameter of the antenna structure (12) arranged at the object (20);
- and to store in the storage device (180) and/or to transfer to a receiver of the object (20) the measured value together with the read-out seal identifier (14) and/or the read-out object identifier (24).

8. The system according to claim 7, **characterized in that** the antenna structure of the seal element (10) and the at least one coupling element (30) are arranged on a common carrier.

9. The system according to claim 7, **characterized in that** the antenna structure (12) of the seal element (10) and the at least one coupling element (30) are arranged on different, separate carriers (10, 40).

10. The system according to any of claims 7 to 9, **characterized in that** the at least one coupling element (30) comprises an element acting as a capacity, in particular a metallic area, and/or that the at least one coupling element comprises an element acting as an inductance, in particular a coil, and/or that the at least one coupling element comprises a material with specified permittivity elevated compared with the surrounding region.

11. The system according to any of claims 7 to 10, **characterized in that** a multiplicity of coupling elements (30; 30') are present on a carrier (40), wherein the coupling elements (30; 30') are arranged on the carrier (40) in irregular, preferably random, manner.

12. The system according to any of claims 7 to 11, **characterized in that** the measuring apparatus (100) is devised, when the antenna structure (12) of the seal element (10) and the at least one coupling element (30) are arranged relative to each other at the object to be secured (20),
- to read out a seal identifier (14) of the seal element (10) and/or an object identifier (24) of the object (20) by means of the read-out device (190);
- to measure the value of the oscillating circuit parameter of the antenna structure (12) arranged at the object (20); and
- to compare the measured value with a reference value stored, together with the read-out seal identifier (14) and/or the read-out object identifier (24), in the storage device (180).

13. The system according to any of claims 7 to 12, **characterized in that** the measuring apparatus (100) comprises:
- an exciter antenna (130) for exciting the antenna structure (12) by means of an energy pulse;
- a measuring antenna (140) for capturing a decaying oscillation of the antenna structure (12) in response to the excitation by the energy pulse and
an evaluation device (160) for evaluating the captured oscillation of the antenna structure (12) with regard to the value of the oscillating circuit parameter.

## Revendications

1. Procédé de sécurisation contre la contrefaçon d'un objet (20), comprenant les étapes :
- mise à disposition (S1) d'un élément de scellement (10) ayant une structure d'antenne (12) ;
- mise à disposition (S3) d'un objet à sécuriser (20) ;
- mise à disposition (S2) d'au moins un élément de couplage (30) agencé à l'objet (20) ou pouvant être agencé à l'objet (20),
- agencement (S4) de l'élément de scellement (10) et éventuellement du au moins un élément de couplage (30) à l'objet (20), de telle façon qu'un agencement relatif de la structure d'antenne (12) par rapport au au moins un élément de couplage (30) à l'objet (20) est établi, cependant que
l'élément de couplage est prévu pour et adapté à influencer une valeur d'un paramètre de circuit oscillant de la structure d'antenne (12) quand la structure d'antenne (12) est agencée relativement au au moins un élément de couplage (30) à l'objet (20), et
par l'agencement, la valeur du paramètre de circuit oscillant de la structure d'antenne (12) agencée à l'objet (20) est définie en fonction de l'agencement relatif établi,
**caractérisé par** les autres étapes :
- mesurage (S5) de la valeur du paramètre de circuit oscillant de la structure d'antenne (12) agencée à l'objet (20) relativement au au moins un élément de couplage (30) au moyen d'un dispositif de mesurage (100), et
- affectation (S6, S7), de la valeur mesurée, à l'objet (20) auquel l'élément de scellement (10) est agencé, en tant que caractéristique d'authenticité de l'objet (20).

2. Procédé selon la revendication 1, **caractérisé en ce que** l'étape de l'affectation (S6, S7) de la valeur mesurée à l'objet (20) auquel l'élément de scellement (10) est agencé comprend les étapes suivantes :
- lecture (S6) d'un identificateur de scellement (14) de l'élément de scellement (10) et/ou d'un identificateur d'objet (24) de l'objet au moyen d'un équipement de lecture (190), et
- mémorisation de la valeur mesurée du paramètre de circuit oscillant conjointement avec l'identificateur de scellement (14) lu et/ou avec l'identificateur de l'objet (24) lu, dans un équipement de mémorisation (180).

3. Procédé selon la revendication 2, **caractérisé par** les autres étapes :
- transmission (S8) de la valeur mesurée conjointement avec l'identificateur de scellement (14) lu et/ou avec l'identificateur de l'objet (24) lu, à un destinataire de l'objet (20), et
- mémorisation (S8) de la valeur reçue conjointement avec l'identificateur de scellement (14) reçu et/ou avec l'identificateur de l'objet (24) reçu, en tant que valeur de référence chez le destinataire.

4. Procédé selon la revendication 3, **caractérisé par** les autres étapes chez le destinataire de l'objet après la réception (S10) de l'objet :
- lecture (S11) d'un identificateur de scellement (14) de l'élément de scellement (10) et/ou d'un identificateur d'objet (24) de l'objet reçu (20), au moyen d'un équipement de lecture (190) ;
- mesurage (S12) de la valeur du paramètre de circuit oscillant de la structure d'antenne (12) agencée à l'objet (20) reçu relativement au au moins un élément de couplage (30), au moyen d'un dispositif de mesurage (100), et
- comparaison (S13) de la valeur mesurée avec une valeur de référence mémorisée conjointement avec l'identificateur de scellement (14) lu et/ou avec l'identificateur de l'objet (24) lu, au moyen d'un dispositif de comparaison (170).

5. Procédé selon la revendication 1 ou 4, **caractérisé en ce que** l'étape du mesurage (S5; S12) de la valeur comprend les étapes partielles suivantes :
- excitation de la structure d'antenne (12) par un dispositif de mesurage (100) au moyen d'une impulsion d'énergie ;
- saisie, avec le dispositif de mesurage (100), d'une oscillation décroissante de la structure d'antenne (12) en réponse à l'excitation par l'impulsion d'énergie, et
évaluation, au moyen d'un dispositif de mesurage (100), de l'oscillation saisie de la structure d'antenne (12) quant à la valeur du paramètre de circuit oscillant.

6. Procédé selon la revendication 5, **caractérisé en ce que** l'excitation de la structure d'antenne (12) a lieu sous forme d'excitation inductive au moyen d'un champ magnétique pulsé, cependant que le champ magnétique est de préférence généré par une impulsion de courant individuelle et/ou cependant que l'impulsion de courant est de préférence générée en tant qu'impulsion de courant continu sous forme d'une impulsion de Dirac.

7. Système de sécurisation contre la contrefaçon d'un objet (20), comprenant :
- un élément de scellement (10) ayant une structure d'antenne (12) et
- au moins un élément de couplage (30) agencé à l'objet (20) ou pouvant être agencé à l'objet (20), cependant que l'élément de scellement (10) et le au moins un élément de couplage (30) sont conçus pour être agencés de telle façon à l'objet (20) à sécuriser qu'un agencement relatif de la structure d'antenne (12) par rapport au au moins un élément de couplage (30) à l'objet (20) est établi, cependant que l'élément de couplage est prévu pour et adapté à influencer une valeur d'un paramètre de circuit oscillant de la structure d'antenne (12) quand la structure d'antenne (12) est agencée relativement au au moins un élément de couplage (30) à l'objet (20), cependant que, par l'agencement, la valeur du paramètre de circuit oscillant de la structure d'antenne (12) agencée à l'objet (20) est définie en fonction de l'agencement relatif établi,
**caractérisé en ce que** le système comprend un dispositif de mesurage (100) qui a un équipement de mémorisation (180) et est conçu pour, quand la structure d'antenne (12) de l'élément de scellement (10) et le au moins un élément de couplage (30) sont agencés relativement l'un par rapport à l'autre à l'objet (20) à sécuriser,
- lire un identificateur de scellement (14) de l'élément de scellement et/ou un identificateur d'objet (24) de l'objet (20) au moyen d'un équipement de lecture (190);
- mesurer la valeur du paramètre de circuit oscillant de la structure d'antenne (12) agencée à l'objet (20) :
- et mémoriser dans l'équipement de mémorisation (180) et/ou transmettre à un destinataire de l'objet (20) la valeur mesurée, conjointement avec l'identificateur de scellement (14) lu et/ou avec l'identificateur de l'objet (24) lu.

8. Système selon la revendication 7, **caractérisé en ce que** la structure d'antenne de l'élément de scellement (10) et le au moins un élément de couplage (30) sont agencés sur un support commun.

9. Système selon la revendication 7, **caractérisé en ce que** la structure d'antenne (12) de l'élément de scellement (10) et le au moins un élément de couplage (30) sont agencés sur des supports (10, 40) distincts différents.

10. Système selon une des revendications de 7 à 9, **caractérisé en ce que** le au moins un élément de couplage (30) comprend un élément à effet de capacité, en particulier une surface métallique, et/ou que le au moins un élément de couplage comprend un élément à effet d'inductance, en particulier une bobine, et/ou que le au moins un élément de couplage comprend un matériau à permittivité prédéterminée accrue par rapport à la zone environnante.

11. Système selon une des revendications de 7 à 10, **caractérisé en ce qu'**une pluralité d'éléments de couplage (30; 30') se trouvent sur un support (40), cependant que les éléments de couplage (30; 30') sont agencés sur le support (40) de manière irrégulière, de préférence aléatoire.

12. Système selon une des revendications de 7 à 11, **caractérisé en ce que** le dispositif de mesurage (100) est conçu pour, quand la structure d'antenne (12) de l'élément de scellement (10) et le au moins un élément de couplage (30) sont agencés relativement l'un par rapport à l'autre à l'objet (20) à sécuriser,
- lire un identificateur de scellement (14) de l'élément de scellement (10) et/ou un identificateur d'objet (24) de l'objet (20) au moyen de l'équipement de lecture (190) ;
- mesurer la valeur du paramètre de circuit oscillant de la structure d'antenne (12) agencée à l'objet (20) ; et
- comparer la valeur mesurée avec une valeur de référence mémorisée dans l'équipement de mémorisation (180) conjointement avec l'identificateur de scellement (14) lu et/ou avec l'identificateur de l'objet (24) lu.

13. Système selon une des revendications de 7 à 12, **caractérisé en ce que** le dispositif de mesurage (100) comprend :
- une antenne d'excitation (130) pour l'excitation de la structure d'antenne (12) au moyen d'une impulsion d'énergie ;
- une antenne de mesure (140) pour la saisie d'une oscillation décroissante de la structure d'antenne (12) en réponse à l'excitation par l'impulsion d'énergie, et
- un équipement d'évaluation (160) pour l'évaluation de l'oscillation saisie de la structure d'antenne (12) quant à la valeur du paramètre de circuit oscillant.
